# EUROPÄISCHE PATENTSCHRIFT

(11) **EP 1 007 847 B1**
(45) Veröffentlichungstag und Bekanntmachung des Hinweises auf die Patenterteilung: **24.09.2003**
(21) Anmeldenummer: 98951242.1
(22) Anmeldetag: 31.08.1998
(51) Int. Cl.: F04B 27/10, F04B 39/06, F04B 39/12

(54) **KOLBENKOMPRESSOR FÜR KÄLTEMITTEL MIT WÄRMEISOLATION**
PISTON COMPRESSOR FOR REFRIGERANT, WITH THERMAL INSULATION
COMPRESSEUR A PISTON POUR FRIGORIGENE, AVEC ISOLATION THERMIQUE

(30) Priorität: 29.08.1997 DE 19737887; 23.09.1997 DE 19741979
(43) Veröffentlichungstag der Anmeldung: 14.06.2000
(73) Patentinhaber: Luk Fahrzeug-Hydraulik GmbH & Co. KG, 61352 Bad Homburg (DE)
(72) Erfinder: SEIPEL, Volker, D-69625 Bensheim (DE); HINRICHS, Jan, D-61381 Friedrichsdorf (DE)
(74) Vertreter: Naumann, Ulrich, Dr.-Ing.
(86) Internationale Anmeldenummer: DE9802559
(87) Internationale Veröffentlichungsnummer: WO99011929

(56) Entgegenhaltungen:
- EP-A- 0 411 195
- EP-A- 0 505 805
- WO-A-93/01412
- US-A- 4 371 319
- US-A- 5 354 608
- US-A- 5 542 824

## Beschreibung

Die Erfindung betrifft einen Kompressor, insbesondere für die Klimaanlage eines Kraftfahrzeugs, mit einem Gehäuse und einer in dem Gehäuse angeordneten Verdichtereinheit zum Ansaugen und Verdichten eines Kältemittels, wobei das Kältemittel von einem vorzugsweise in einem stirnseitigen Gehäusedeckel ausgebildeten Ansaugbereich durch die Verdichtereinheit hindurch in den ebenfalls vorzugsweise in dem Gehäusedeckel ausgebildeten Auslaßbereich strömt.

Kompressoren der hier in Rede stehenden Art werden meist als Klimakompressoren bezeichnet und sind aus der Praxis in den unterschiedlichsten Ausführungsformen bekannt. Solche Kompressoren umfassen ein Gehäuse, welches eine von außerhalb angetriebene Verdichter- bzw. Pumpeneinheit einschließt. Die beispielsweise als Axialkolbenpumpe ausgebildete Pumpeneinheit umfaßt wiederum mindestens einen Kolben, der in einem Zylinderblock hin und her bewegbar ist. Üblicherweise ist ein solcher Kompressor mit mehreren Kolben ausgestattet und arbeitet nach dem Taumelscheibenprinzip oder Schwenkscheibenprinzip. Bei Drehung einer Taumelscheibe werden die Kolben in Richtung ihrer Längsachse hin und her bewegt, wobei eine Aufnahmescheibe drehfest im Gehäuse gelagert ist.

Klimakompressoren unterschiedlichster Bauart arbeiten mit einem Kältemittel. Neben herkömmlichen Kältemitteln, deren Einsatz im Lichte eines zunehmenden Umweltbewußtseins immer kritischer erscheint, kann man als Kältemittel ein Inertgas, so bspw. CO₂, verwenden, welches unter Umweltaspekten unbedenklich ist. Die Verwendung eines solchen Kältemittels führt jedoch zu höheren Drücken innerhalb des Verdichters, wodurch ganz besondere konstruktive Maßnahmen, bspw. im Hinblick auf die Materialauswahl und Wanddicke des Gehäuses, erforderlich sind.

Bei Verwendung eines hochfesten Werkstoffes für das Gehäuse des Kompressors ist es ohne weiteres möglich, die bei einem bereits im Ansaugzustand eine hohe Dichte aufweisenden Kältemittel erforderlichen bzw. auftretenden hohen Drücke aufzunehmen. So ist es beispielsweise erforderlich, Berstdrücken bis zu ca. 30 MPa bei Austrittstemperaturen bis zu etwa 160°C bis 170°C standzuhalten.

Wie bereits zuvor erwähnt, umfassen Kompressoren der hier in Rede stehenden Art einen Ansaugbereich und einen Auslaßbereich. Während auf der Saugseite - im Ansaugbereich - Kältemittel mit einer Temperatur meist im Bereich zwischen 30°C und 40°C einströmt, treten auf der Druckseite, d.h. im Auslaßbereich, Temperaturen im Bereich zwischen 80°C und bis zu etwa 170°C auf.

Kompressorgehäuse sind in der Regel aus Metall, bspw. aus Aluminium, aus Edelstahl oder aus einem hochfesten Stahl gefertigt. Folglich wird sich die hohe Temperatur im Auslaßbereich - zwangsweise - auf den Ansaugbereich insoweit auswirken, als dieser über das mit dem Kältemittel in Kontakt kommende Gehäusematerial sowie "Innenleben" des Kompressors aufgewärmt wird. Folglich wird dadurch das ansaugseitige gasförmige Kältemittel erwärmt, wodurch dessen Dichte abnimmt. Dies wiederum führt zu einem Lieferverlust bzw. zu einer Reduzierung des Massenstroms an Kältemittel und somit zu einem Leistungsverlust des Kompressors. Aufgrund der Temperaturbeeinflussung des Auslaßbereichs gegenüber dem Ansaugbereich wird der Wirkungsgrad eines herkömmlichen Kompressors erheblich verringert.

Aus dem Stand der Technik ist es auch bereits bekannt, entweder im Ansaugbereich bzw. Einlasstrakt (WO 93/01412 und EP 0 411 195 A1) oder am Zylinderkopf an dem Auslasstrakt (US 4,371,319) wärmedämmende Maßnahmen vorzusehen. Ungeachtet dieser bereits bekannten wärmedämmenden Maßnahmen weisen die bekannten Kompressoren ein ganz spezifisches Problem auf, wonach nämlich die hohe Temperaturdifferenz zwischen Auslassbereich und Ansaugbereich zu einer Verringerung des Wirkungsgrades führt, und zwar aufgrund einer Erwärmung des Ansaugbereichs und somit auch des dort einströmenden Kältemittels aufgrund der Wärmeleitfähigkeit der Kompressorbauteile, wobei die Temperatur vom Auslassbereich auf den Ansaugbereich - ungewollt - übergeht. Eine Verringerung des Wirkungsgrads ist die Folge.

Der vorliegenden Erfindung liegt die Aufgabe zugrunde, einen Kompressor der gattungsbildenden Art derart auszugestalten und weiterzubilden, dass eine Verringerung des Wirkungsgrads aufgrund der voranstehend genannten Problematik zumindest reduziert ist.

Der erfindungsgemäße Kompressor löst die voranstehende Aufgabe durch die Merkmale des Patentanspruches 1. Danach ist ein Kompressor der eingangs genannten Art dadurch gekennzeichnet, daß die mit dem Kältemittel in Berührung kommenden Bauteile, nämlich die den Strömungspfad zwischen Ansaugbereich und Auslaßbereich bildenden Innenwandungen, zumindest geringfügig gegenüber dem Kältemittel wärmeisoliert sind.

Erfindungsgemäß ist zunächst einmal erkannt worden, dass die hohe Temperaturdifferenz zwischen Auslassbereich und Ansaugbereich eines gattungsbildenden Kompressors zu einer Verringerung des Wirkungsgrades jedenfalls dann führt, wenn eine Erwärmung des Ansaugbereichs und somit auch des dort einströmenden Kältemittels stattfindet. Des Weiteren ist erkannt worden, dass sich nicht nur die Bauteile des Ansaugbereichs erwärmen, sondern auch das dort einströmende Kältemittel, welches nämlich einen unmittelbaren Wärmetausch an den Wandungen des Ansaugbereichs erfährt. Aufgrund der metallischen Ausgestaltung der Kompressorbauteile ist von einer sehr guten Wärmeleitfähigkeit und somit von einem guten Wärmeübergang auszugehen.

In weiter erfindungsgemäßer Weise ist erkannt worden, dass man den Wirkungsgrad dadurch erhöhen kann, dass man die mit dem Kältemittel in Berührung kommenden Bauteile gegenüber dem Kältemittel wärmeisoliert. Im Konkreten wird in erfindungsgemäßer Weise vorgeschlagen, die den Strömungspfad zwischen Ansaugbereich und Auslassbereich bildenden Wandungen zumindest geringfügig gegenüber dem Kältemittel zu isolieren, so dass sich das Kältemittel im Verlaufe des Einströmens bzw. Durchströmens vom Ansaugbereich bis in den Auslassbereich nicht oder nur unwesentlich an den Wandungen der jeweiligen Bauteile des Kompressors erwärmen kann.

Im Gegensatz zum Stand der Technik wird nach der erfindungsgemäßen Lehre gezielt der Strömungspfad bzw. die den Strömungspfad bildenden Wandungen vom Ansaugbereich bis in den Auslassbereich wärmeisoliert und nicht etwa einzelne Bereiche im Einlasstrakt oder im Auslasstrakt. Vor allem wird von einer herkömmlichen Wärmeisolation dahingehend abgewichen, dass nicht etwa Bauteile des Kompressors gegeneinander wärmeisoliert werden, sondern dass vielmehr die den Strömungspfad bildenden Wandungen wärmeisoliert werden, so dass eine Erwärmung des dort strömenden Kältemittels wirksam reduziert ist.

Im Konkreten könnte die Wärmeisolation als Auskleidung aus einem eine geringe Wärmeleitfähigkeit aufweisenden Material ausgeführt sein. Ausgekleidet werden demnach die den Strömungspfad bildenden Wandungen innerhalb des Kompressors, wobei auch hier bereits eine partielle Auskleidung im Ansaugbereich zu einem ganz erheblichen Erfolg führt.

Im Hinblick auf eine besonders einfache Ausgestaltung des Kompressors könnte die Wärmeisolation als Beschichtung aus einem eine geringe Wärmeleitfähigkeit aufweisenden Material ausgeführt sein. Herkömmliche Beschichtungstechniken kommen hier in Frage, wobei das Material der Beschichtung, bspw. ETFE (Ethylen-Tetrafluorethylen = Teflon, dient u.a. auch als Verschleißschutz), im Temperaturbereich bis zu 170°C temperaturbeständig sein muß.

Geht man davon aus, daß sowohl der Ansaugbereich als auch der Auslaßbereich in einem oftmals auch als Druckdeckel bezeichneten Gehäusedeckel ausgebildet ist, könnte man die Wärmeisolation gleichermaßen auch an der Innenwandung des Auslaßkanals oder gar an der Innenwandung des gesamten Auslaßbereichs vorsehen, könnte man nämlich die gesamte Innenwandung des Gehäusedeckels mit einer entsprechenden Wärmeisolation versehen. Insoweit könnte man die Wärmeisolation an der gesamten Innenwandung des Gehäusedeckels einheitlich handhaben bzw. im Falle einer Beschichtung dort einheitlich aufbringen.

Wie bereits zuvor erwähnt, könnte die Wärmeisolation in Form einer Auskleidung ausgeführt sein. Insoweit ist es von besonderem Vorteil, die Auskleidung innerhalb des Gehäusedeckels in Form eines losen Einlegeteils auszubilden, so daß dieses Einlegeteil den Strömungspfad für das Kältemittel begrenzt.

Zur weiterreichenden Reduzierung der Wärmeleitfähigkeit zwischen Gehäusedeckel und Kältemittel könnte die Auskleidung von der innenwandung des Gehäusedeckels zumindest geringfügig beabstandet sein, so daß zwischen der eigentlichen Innenwandung des Gehäusedeckels und der Auskleidung ein Zwischenraum besteht. Dieser Zwischenraum reduziert den Wärmeübergang zwischen Gehäusedeckel und Kältemittel abermals.

Im Konkreten könnte die Auskleidung mit partiell ausgebildeten, vorzugsweise integralen Abstandshaltern an der Innenwandung des Gehäusedeckels anliegen, so daß der Abstand zwischen dem Einlegeteil und der Innenwandung des Gehäusedeckels aufgrund des einströmenden Kältemittels nicht verringert wird.

Im Rahmen einer weiteren Alternative könnte die Auskleidung bzw. Beschichtung als poröser Schaum ausgeführt sein, wodurch nämlich ein Gaspolster - innerhalb des Schaums - zu einer Verringerung des Wärmeübergangs zwischen Innenwandung des Gehäusedeckels und dem Kältemittel führt. Der Schaum sollte eine offene Porosität aufweisen, damit das Gefüge bei auftretenden Druckdifferenzen nicht zerstört wird.

Wie bereits zuvor erwähnt, könnte man die Innenwandung des Gehäusedeckels auch insgesamt beschichten, nämlich überall dort, wo der Strömungspfad des Kältemittels durch die Innenwandung des Gehäusedeckels definiert ist. Im Rahmen einer solchen Beschichtung ist es auch denkbar, dieser eine die Strömung begünstigende Oberflächenstruktur zu geben, so bspw. dort eine definierte Rauhigkeit vorzusehen, die die Oberflächenstruktur einer Haifischhaut aufweisen kann. Eine solche Maßnahme kann jedenfalls die Strömung innerhalb des Ansaugbereichs und des Auslaßbereichs begünstigen.

Ebenso ist es denkbar, die Innenwandung des Gehäusedeckels nur grob zu bearbeiten und die erforderliche Oberflächenstruktur durch die Beschichtung zu erzielen. So ließe sich bspw. auch eine für die Strömung des Kältemittels zu rauhe Oberfläche der Innenwandung des Gehäusedeckels mittels eines geeigneten Beschichtungsmaterials glätten.

Bei Kompressoren der hier in Rede stehenden Art grenzt der den Ansaugbereich und den Auslaßbereich umfassende Gehäusedeckel an eine Ventilplatte, so daß der Strömungspfad des Kältemittels zumindest teilweise zwischen der Ventilplatte und der Innenwandung des Gehäusedeckels definiert ist. Insoweit ist es von weiterem Vorteil, wenn die Wärmeisolation auch auf der Ventilplatte vorgesehen ist. Dazu könnte die Ventilplatte auf der dem Gehäusedeckel zugewandten Seite beschichtet sein, wie dies auch bei der Innenwandung des Gehäusedeckels der Fall sein kann.

Altemativ dazu ist es - wie bei der Innenwandung des Gehäusedeckels - auch möglich, die Ventilplatte auf der dem Gehäusedeckel zugewandten Seite mit einem losen Einlegeteil zu belegen, welches im übrigen auch zwischen der Ventilplatte und dem Gehäusedeckel zumindest im Randbereich und in Übergangsbereichen im Sinne einer Dichtung wirken kann.

Die voranstehenden Ausführungen beziehen sich auf eine Reduzierung der Wärmeleitfähigkeit zwischen der Innenwandung des Gehäusedeckels und dem Kältemittel. Eine Erwärmung des Kältemittels läßt sich weiter dadurch reduzieren, daß zusätzlich die den Strömungspfad bildenden oder an den Strömungspfad angrenzenden Flächen in der Pumpeneinheit mit einem eine geringe Leitfähigkeit aufweisenden Material beschichtet sind. Einer solchen Beschichtung könnten dabei gleich zwei Aufgaben zukommen, nämlich zum einen die angestrebte Reduzierung eines Wärmeübergangs zwischen den Bauteilen des Kompressors und dem Kältemittel und andererseits die Aufbringung einer Verschleißschutzschicht zur Verlängerung der Lebensdauer des Kompressors.

Sofern die Pumpeneinheit als Axialkolbenpumpe ausgebildet ist, könnte die Zylinderlauffläche im Zylinderblock mit dem eine geringe Leitfähigkeit aufweisenden Material beschichtet sein. Eine dort aufgebrachte Wärmeisolation, die gleichzeitig als Verschleißschutzschicht dient, ist aufgrund der dort üblicherweise auftretenden mechanischen Beanspruchung von ganz besonderem Vorteil.

Des weiteren ist es denkbar, die Kolbenoberfläche des Kolbens ebenfalls mit dem eine geringe Leitfähigkeit aufweisenden Material zu beschichten, wobei auch dort die Beschichtung gleichzeitig als Verschleißschutzschicht dient.

Ungeachtet der voranstehend erörterten Maßnahmen zur Reduzierung eines Wärmeübergangs zwischen Teilen des Kompressors und dem Kältemittel mittels Auskleidung oder Beschichtung könnte eine weitere Maßnahme zur Reduzierung des Wärmeübergangs darin liegen, daß der Gehäusedeckel selbst aus einem Material mit geringer Wärmeleitfähigkeit hergestellt ist. Dabei könnte der Gehäusedeckel aus einem Metall mit geringer Wärmeleitfähigkeit bestehen, so bspw. aus einem hochfesten Stahl, der gegenüber Aluminium eine doch erheblich geringere Wärmeleitfähigkeit aufweist. In ganz besonders vorteilhafter Weise ist der Gehäusedeckel aus einem keramischen Material oder einem keramischen Verbundwerkstoff hergestellt, wodurch der Wärmeübergang auch bereits ohne Beschichtung oder Auskleidung des Strömungspfades ganz erheblich reduziert ist.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des bevorzugten Ausführungsbeispiels der Erfindung anhand der Zeichnung werden auch im allgemeinen bevorzugte Ausgestaltungen und Weiterbildungen der Lehre erläutert. In der Zeichnung zeigt
- Fig. 1: in einer schematischen Seitenansicht, teilweise und geschnitten ein Ausführungsbeispiel eines erfindungsgemäßen Kompressors, wobei dort lediglich der Ansaugbereich und der Auslaßbereich im Gehäusedeckel dargestellt sind und
- Fig. 2: in einer vergrößerten Seitenansicht, geschnitten, den Ansaugbereich im Gehäusedeckel, wobei dort eine zur Innenwandung des Gehäusedeckels beabstandete Auskleidung als Wärmeisolation vorgesehen ist.

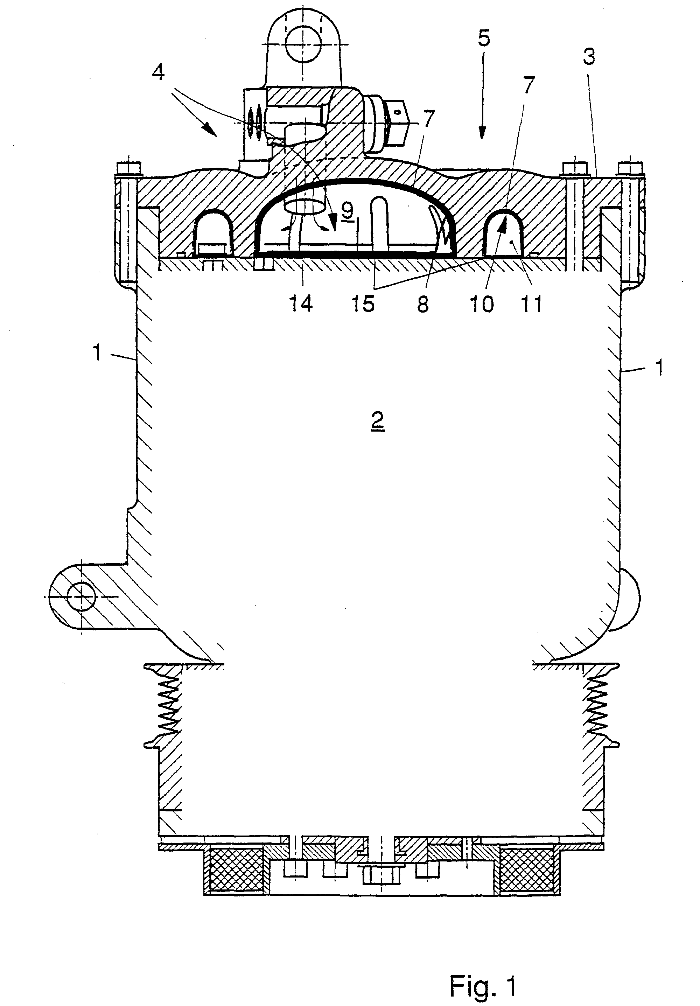

Fig. 1 zeigt einen Kompressor für die Klimaanlage eines Kraftfahrzeugs. Der Kompressor umfaßt ein Gehäuse 1 und eine in dem Gehäuse 1 angeordnete Verdichtungseinheit 2 zum Ansaugen und Verdichten eines Kältemittels, wobei es sich bei dem Kältemittel um CO₂ handeln kann.

Das Kältemittel strömt von einem in einem stirnseitigen Gehäusedeckel 3 ausgebildeten Ansaugbereich 4 durch die Verdichtereinheit 2 hindurch in den ebenfalls im Gehäusedeckel 3 ausgebildeten Auslaßbereich 5.

Die mit dem Kältemittel in Berührung kommenden Bauteile des Kompressors, nämlich die den Strömungspfad 6 zwischen Ansaugbereich 4 und Auslaßbereich 5 bildenden Wandungen, sind gegenüber dem Kältemittel wärmeisoliert.

Bei dem in Fig. 1 dargestellten Ausführungsbeispiel ist die Wärmeisolation 7 als Beschichtung aus einem eine geringe Wärmeleitfähigkeit aufweisenden Material ausgeführt, wobei die Wärmeisolation 7 sowohl an der Innenwandung 8 des Ansaugkanals 9 als auch an der Innenwandung 10 des Auslaßkanals 11 vorgesehen ist. Genauergesagt sind die gesamten Innenwandungen 8, 10 des Ansaugbereichs 4 und des Auslaßbereichs 5 wärmeisolierend beschichtet, wobei dazu letztendlich die gesamte Innenwandung 8, 10 des Gehäusedeckels 3 beschichtet ist.

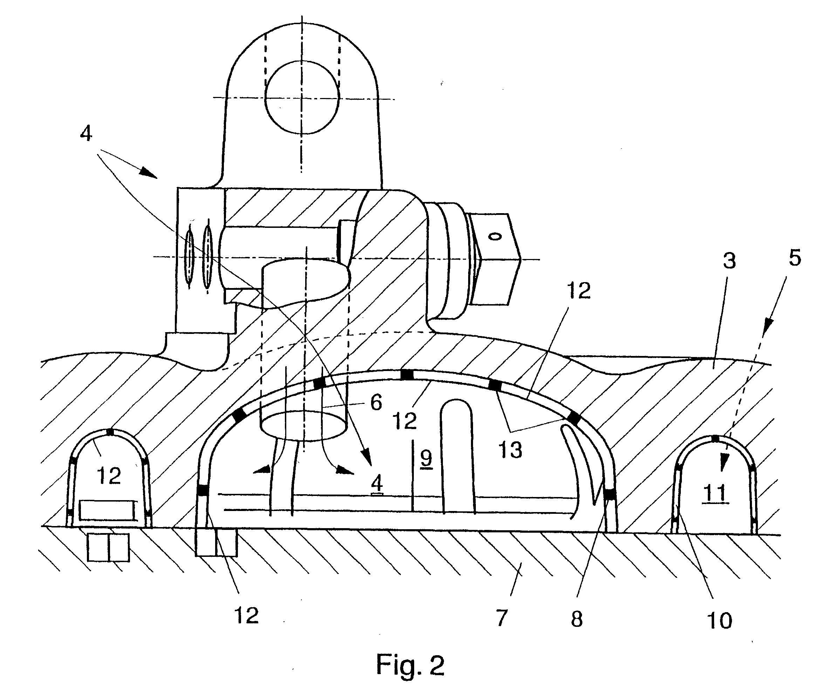

Bei dem in Fig. 2 teilweise und dabei schematisch dargestellten Ausführungsbeispiel ist für den Ansaugbereich 4 angedeutet, daß dort die Innenwandung 8, 10 des Gehäusedeckels 3 ausgekleidet ist, nämlich in Form eines losen Einlegeteils 12. Dieses Einlegeteil 12 ist von der Innenwandung 8, 10 geringfügig beabstandet, wobei diese Beabstandung durch integrale Abstandshalter 13 zustande kommt. Die Abstandshalter 13 liegen an der Innenwandung 8, 10 des Gehäusedeckels 3 unmittelbar an.

Fig. 1 läßt des weiteren erkennen, daß der Gehäusedeckel 3 an eine Ventilplatte 14 angrenzt. Auch auf der Ventilplatte 14 ist eine Wärmeisolation 15 vorgesehen, wobei dort die Ventilplatte 14 auf der dem Gehäusedeckel 3 zugewandten Seite beschichtet ist, und zwar vorzugsweise mit dem gleichen Material wie die Innenwandung 8, 10 des Gehäusedeckels 3. Insoweit ist der zwischen Gehäusedeckel 3 und Ventilplatte 14 gebildete Strömungsfpad insgesamt beschichtet und somit wärmeisoliert.

Hinsichtlich der wärmeisolierenden und verschleißfesten Beschichtung weiterer Bauteile des Kompressors wird zur Vermeidung von Wiederholungen auf den allgemeinen Teil der Beschreibung verwiesen. Gleiches gilt für das Material des Gehäusedeckels 3.

## Patentansprüche

1. Kompressor, insbesondere für die Klimaanlage eines Kraftfahrzeugs, mit einem Gehäuse (1) und einer in dem Gehäuse (1) angeordneten Verdichtereinheit (2) zum Ansaugen und Verdichten eines Kältemittels, wobei das Kältemittel von einem vorzugsweise in einem stirnseitigen Gehäusedeckel (3) ausgebildeten Ansaugbereich (4) durch die Verdichtereinheit (2) hindurch in den ebenfalls vorzugsweise in dem Gehäusedeckel (3) ausgebildeten Auslassbereich (5) strömt,
**dadurch gekennzeichnet, dass** die mit dem Kältemittel in Berührung kommenden Bauteile, nämlich die den Strömungspfad (6) zwischen Ansaugbereich (4) und Auslassbereich (5) bildenden Innenwandungen, zumindest geringfügig gegenüber dem Kältemittel wärmeisoliert sind.

2. Kompressor, insbesondere nach Anspruch 1, **dadurch gekennzeichnet, dass** die Wärmeisolation (7, 15) als Auskleidung oder als Beschichtung aus einem eine geringe Wärmeleitfähigkeit aufweisenden Material ausgeführt ist.

3. Kompressor, insbesondere nach einem der Ansprüche 1 und 2, wobei die Wärmeisolation (7) an der Innenwandung (10) des Auslasskanals (11) oder an der Innenwandung (10) des gesamten Auslassbereichs (5) oder an der gesamten Innenwandung (8,10) des Gehäusedeckels (3) vorgesehen ist, wobei die Innenwandung (8, 10) des Gehäusedeckels (3) ausgekleidet sein kann, **dadurch gekennzeichnet, dass** die Auskleidung in Form eines losen Einlegeteils (12) ausgebildet ist oder von der Innenwandung (8, 10) zumindest geringfügig beabstandet ist, wobei die Auskleidung mit partiell ausgebildeten, vorzugsweise integralen Abstandshaltern (13) an der Innenwandung (8, 10) des Gehäusedeckels (3) anliegen kann, oder dass die Auskleidung als poröser Schaum ausgeführt ist, wobei der Schaum eine offene Porosität aufweisen kann, oder dass die Innenwandung (8, 10) des Gehäusedeckels (3) insgesamt beschichtet ist, wobei die Beschichtung eine die Strömung begünstigende Oberflächenstruktur aufweisen kann, die insbesondere eine definierte Rauhigkeit, vorzugsweise in Form einer Haifischhaut, aufweist.

4. Kompressor, insbesondere nach einem der Ansprüche 1 bis 3, wobei der Gehäusedeckel (3) an eine Ventilplatte (14) angrenzt, **dadurch gekennzeichnet, dass** die Wärmeisolation (15) auf der Ventilplatte (14) vorgesehen ist, wobei die Ventilplatte (14) auf der dem Gehäusedeckel (3) zugewandten Seite beschichtet oder auf der dem Gehäusedeckel (3) zugewandten Seite mit einem losen Einlegeteil (12) belegt sein kann.

5. Kompressor, insbesondere nach einem der Ansprüche 1 bis 4, **dadurch gekennzeichnet, dass** den Strömungspfad bildende oder an den Strömungspfad (6) angrenzende Flächen in der Pumpeneinheit mit einem eine geringe Wärmeleitfähigkeit aufweisenden Material beschichtet sind, wobei die Pumpeneinheit als Axialkolbenpumpe ausgebildet sein kann und die Zylinderlauffläche im Zylinderblock mit einem eine geringe Wärmeleitfähigkeit aufweisenden Material beschichtet sein kann.

6. Kompressor, insbesondere nach Anspruch 5, **dadurch gekennzeichnet, dass** die Kolbenoberfläche des Kolbens mit einem eine geringe Wärmeleitfähigkeit aufweisenden Material beschichtet ist.

7. Kompressor, insbesondere nach einem der Ansprüche 1 bis 6, **dadurch gekennzeichnet, dass** der Gehäusedeckel (3) aus einem Material mit geringer Wärmeleitfähigkeit hergestellt ist, wobei der Gehäusedeckel (3) vorzugsweise aus Metall mit geringer Wärmeleitfähigkeit oder aus einem hochfestem Stahl hergestellt ist oder aus einem keramischen Material hergestellt ist.

## Claims

1. Compressor, especially for the air-conditioning system of a motor vehicle, having a housing (1) and a compressor unit (2) arranged in the housing (1) for the intake and compression of a refrigerant, the refrigerant flowing from an intake region (4), preferably formed in an end-face housing lid (3), and through the compressor unit (2) into the outlet region (5), which is likewise preferably formed in the housing lid (3), **characterised in that** the components coming into contact with the refrigerant, namely the inner walls forming the flow path (6) between the intake region (4) and the outlet region (5), are at least slightly thermally insulated from the refrigerant.

2. Compressor, especially according to claim 1, **characterised in that** the thermal insulation (7, 15) is in the form of a lining or coating composed of a material having low thermal conductivity.

3. Compressor, especially according to either claim 1 or claim 2, the thermal insulation (7) being provided on the inner wall (10) of the outlet channel (11) or on the inner wall (10) of the entire outlet region (5) or on the entire inner wall (8, 10) of the housing lid (3), it being possible for the inner wall (8, 10) of the housing lid (3) to be lined, **characterised in that** the lining is in the form of a loose insert (12) or is spaced at least slightly from the inner wall (8, 10), it being possible for the lining to abut the inner wall (8, 10) of the housing lid (3) by way of partially formed, preferably integral spacers (13), or **in that** the "lining is in the form of a porous foam, it being possible for the foam to have an open porosity, or **in that** all of the inner wall (8, 10) of the housing lid (3) is coated, it being possible for the coating to have a flow-promoting surface structure which has, in particular, a defined roughness, preferably having the form of a sharkskin.

4. Compressor, especially according to any one of claims 1 to 3, the housing lid (3) adjoining a valve plate (14), **characterised in that** the thermal insulation (15) is provided on the valve plate (14), it being possible for the valve plate (14) to be coated on the side facing the housing lid (3) or to be covered with a loose insert (12) on the side facing the housing lid (3).

5. Compressor, especially according to any one of claims 1 to 4, **characterised in that** faces in the pump unit that form the flow path or that adjoin the flow path (6) are coated with a material having low thermal conductivity, it being possible for the pump unit to be in the form of an axial piston pump and it being possible for the cylinder surface in the cylinder block to be coated with a material having low thermal conductivity.

6. Compressor, especially according to claim 5, **characterised in that** the piston surface of the piston is coated with a material having low thermal conductivity.

7. Compressor, especially according to any one of claims 1 to 6, **characterised in that** the housing lid (3) is manufactured from a material having low thermal conductivity, the housing lid (3) preferably being manufactured from metal having low thermal conductivity or from a high-strength steel or from a ceramic material.

## Revendications

1. Compresseur, en particulier pour un appareil de conditionnement d'air d'un véhicule automobile, avec un carter (1) et une unité de compresseur (2) disposée dans le carter (1) pour aspirer et comprimer un agent frigorigène, l'agent frigorigène s'écoulant depuis une zone d'aspiration (4), formée de préférence dans un couvercle (3) du carter du côté frontal, à travers l'unité de compresseur (2) jusque dans une zone de sortie (5) formée également de préférence dans le couvercle (3) du carter,
**caractérisé en ce que** les pièces de construction venant en contact avec l'agent frigorigène, à savoir les parois intérieures formant le chemin d'écoulement (6) entre la zone d'aspiration (4) et la zone de sortie (5), sont isolées thermiquement, au moins légèrement, par rapport à l'agent frigorigène.

2. Compresseur, en particulier selon la revendication 1,
**caractérisé en ce que** l'isolation thermique (7, 15) est réalisée sous forme de revêtement ou d'enduction en un matériau présentant une faible conductibilité thermique.

3. Compresseur, en particulier selon l'une des revendications 1 et 2, l'isolation thermique (7) étant prévue sur la paroi intérieure (10) du canal de sortie (11) ou sur la paroi intérieure (10) de l'ensemble de la zone de sortie (5) ou sur l'ensemble de la paroi intérieure (8,10) du couvercle (3) du carter, la paroi intérieure (8,10) de l'ensemble du couvercle (3) du carter pouvant être revêtue, **caractérisé en ce que** le revêtement est réalisé sous la forme d'une pièce insérée (12) mobile, ou bien est écartée au moins légèrement de la paroi intérieure (8,10), le revêtement pouvant être en appui sur la paroi intérieure (8,10) du couvercle (3) du carter par des entretoises (13) partiellement formées, de préférence d'une seule pièce, ou bien que le revêtement est réalisé sous forme de mousse poreuse, la mousse pouvant présenter une porosité ouverte, ou bien que la paroi intérieure (8,10) du couvercle (3) du carter est revêtue dans son ensemble, le revêtement pouvant présenter une structure favorisant l'écoulement qui présente une rugosité définie, de préférence sous forme d'une peau de requin.

4. Compresseur, en particulier selon l'une des revendications 1 à 3, le couvercle (3) du carter étant adjacent à une plaque de soupape (14),
**caractérisé en ce que** l'isolation thermique (15) est prévue sur la plaque de soupape (14), la plaque de soupape (14) pouvant être revêtue sur la face tournée vers le couvercle (3) du carter ou être déposée sur la face tournée vers le couvercle (3) du carter par une pièce insérée (12) mobile.

5. Compresseur, en particulier selon l'une des revendications 1 à 4,
**caractérisé en ce que** les surfaces formant le chemin d'écoulement ou adjacentes au chemin d'écoulement (6) dans l'unité de pompe sont revêtues d'un matériau présentant une faible conductibilité thermique, l'unité de pompe pouvant être réalisée sous forme de pompe à piston axial et la surface de roulement de cylindre dans le bloc-cylindres pouvant être revêtue d'un matériau présentant une faible conductibilité thermique.

6. Compresseur, en particulier selon la revendication 5,
**caractérisé en ce que** la surface de piston du piston est revêtue d'un matériau présentant une faible conductibilité thermique.

7. Compresseur, en particulier selon l'une des revendications 1 à 6,
**caractérisé en ce que** le couvercle (3) du carter est fabriqué en un matériau à faible conductibilité thermique, le couvercle (3) du carter étant fabriqué en un métal à faible conductibilité thermique ou en un acier à résistance élevée ou bien étant fabriqué en un matériau céramique.
